# EUROPEAN PATENT APPLICATION

(11) **EP 2 410 146 A1**
(43) Date of publication of application: **25.01.2012**
(21) Application number: 09841897.3
(22) Date of filing: 19.03.2009
(51) Int. Cl.: F01N 3/08, B01D 53/94, F01N 3/24

(54) **EXHAUST PURIFYING DEVICE FOR INTERNAL COMBUSTION ENGINE**

(71) Applicant: Toyota Jidosha Kabushiki Kaisha, Toyota-shi, Aichi 471-8571 (JP)
(72) Inventor: ASANUMA, Takamitsu, Toyota-shi Aichi 471-8571 (JP); NISHIOKA, Hiromasa, Toyota-shi Aichi 471-8571 (JP); IMAI, Daichi, Toyota-shi Aichi 471-8571 (JP); NAKATA, Yuka, Toyota-shi Aichi 471-8571 (JP); UMEMOTO, Kazuhiro, Toyota-shi Aichi 471-8571 (JP)
(74) Representative: Kuhnen & Wacker
(86) International application number: PCT/JP2009/056209
(87) International publication number: WO 2010/106695

(57) **Abstract**

The exhaust purification system of an internal combustion engine is provided with an NO_{X} selective reduction catalyst which is arranged in an engine exhaust passage and which has the function of absorbing NO_{X} which is contained in exhaust gas when an air-fuel ratio of inflowing exhaust gas is lean, releasing the absorbed NO_{X} when the air-fuel ratio of the inflowing exhaust gas becomes a stoichiometric air-fuel ratio or rich, and selectively reducing the NO_{X} and with a fuel addition valve which feeds fuel to the NO_{X} selective reduction catalyst. In the case of the region near the stoichiometric air-fuel ratio in the region where the air-fuel ratio of the exhaust gas flowing into the NO_{X} selective reduction catalyst is lean, the fuel addition valve is used to feed fuel to the NO_{X} selective reduction catalyst to selectively reduce the NO_{X}.

## Description

### Technical Field

The present invention relates to an exhaust purification system of an internal combustion engine.

### Background Art

The exhaust gas of a diesel engine, gasoline engine, or other internal combustion engine, for example, contains carbon monoxide (CO), unburned fuel (HC), nitrogen oxides (NO_{X}), particulate matter (PM), or other ingredients. The internal combustion engine has an exhaust purification system attached to it to purify these ingredients.

Japanese Patent No. 278304 discloses an exhaust purification system provided with a device for removing nitrogen oxides constituted by an NO_{X} absorption and release material which absorbs NO_{X} when the air-fuel ratio of the exhaust gas is lean and releases the absorbed NO_{X} when the air-fuel ratio of the exhaust gas is the stoichiometric air-fuel ratio or less. In this system, it is disclosed, at the time of releasing and treating the NO_{X}, to make the air-fuel ratio of the exhaust gas the stoichiometric air-fuel ratio or less and to further make the temperature of the NO_{X} absorption and release material rise so as to improve the purification rate of NO_{X}.

Japanese Patent publication (A) No. 2007-154764 discloses an exhaust purification system of an internal combustion engine arranging in an engine exhaust passage a post treatment system which is comprised of an SO_{X} trapping catalyst, a particulate filter carrying an NO_{X} storage reduction catalyst, and an NO_{X} storage reduction catalyst and a fuel feed valve for feeding fuel for post treatment use to the post treatment system. In this system, it is disclosed, when the degree of deterioration of any catalyst exceeds a predetermined degree of deterioration, to cause the catalyst with the lowest degree of deterioration to perform the purification action of the exhaust gas.

The NO_{X} which is contained in the exhaust gas can be purified by reduction. To purify the NO_{X} which is contained in the exhaust gas of the engine body, sometimes a selective reduction catalyst which can reduce the NO_{X} is arranged in the engine exhaust passage. The exhaust purification system in which the selective reduction catalyst is arranged can temporarily store the NO_{X} which is exhausted from the engine body in the selective reduction catalyst when the selective reduction catalyst is a low temperature. Further, by feeding the reducing agent to the selective reduction catalyst in a predetermined temperature region, it is possible to selectively reduce the NO_{X} which is exhausted from the engine body.

Further, to purify the NO_{X} which is contained in the exhaust gas of the engine body, sometimes a three-way catalyst is arranged in the engine exhaust passage. When the temperature of the three-way catalyst is the activation temperature or more and the air-fuel ratio of the exhaust gas flowing into the three-way catalyst is the stoichiometric air-fuel ratio or rich, a three-way catalyst may be used to reduce the NO_{X}.

In this regard, the selective reduction catalyst has less of an ability to selectively reduce the NO_{X} when the sir-fuel ratio of the inflowing exhaust gas is lean if the temperature is higher than a predetermined temperature region. That is, sometimes the purification rate of NO_{X} of the selective reduction catalyst becomes lower. Furthermore, the selective reduction catalyst sometimes becomes lower in purification rate of NO_{X} in the region of an air-fuel ratio near the stoichiometric air-fuel ratio in the region of a lean air-fuel ratio of the inflowing exhaust gas. In this way, there was the problem that the selective reduction catalyst becomes smaller in purification rate of NO_{X} in a predetermined operating region.

### Disclosure of Invention

The present invention has as its object to provide an exhaust purification system of an internal combustion engine which suppresses a fall in purification ability of nitrogen oxides.

The first exhaust purification system of an internal combustion engine of the present invention is provided with an NO_{X} reduction catalyst which is arranged in an engine exhaust passage and which has the function of absorbing NO_{X} which is contained in exhaust gas when an air-fuel ratio of inflowing exhaust gas is lean, releasing the absorbed NO_{X} when the air-fuel ratio of the inflowing exhaust gas becomes a stoichiometric air-fuel ratio or rich, and selectively reducing the NO_{X} and with a reducing agent feed device which feeds a reducing agent to the NO_{X} reduction catalyst. In the case of the region near the stoichiometric air-fuel ratio in the region where the air-fuel ratio of the exhaust gas flowing into the NO_{X} reduction catalyst is lean, the reducing agent feed device is used to feed a reducing agent to the NO_{X} reduction catalyst to selectively reduce the NO_{X}. Due to this configuration, in the region near the stoichiometric air-fuel ratio, it is possible to suppress a drop in the purification ability of nitrogen oxides.

In this invention, a three-way catalyst is provided arranged downstream of the NO_{X} reduction catalyst in the engine exhaust passage, and the reducing agent feed device includes a fuel addition valve which feeds fuel to the engine exhaust passage at the upstream side of the NO_{X} reduction catalyst. If increasing the amount of fuel which is injected at the combustion chambers of the engine body so as to lower the air-fuel ratio of the exhaust gas flowing into the three-way catalyst to the stoichiometric air-fuel ratio or less, it is possible to feed fuel from the fuel addition valve to selectively reduce the NO_{X} at the not reduction catalyst when the air-fuel ratio of the exhaust gas flowing into the NO_{X} reduction catalyst is inside the region near the stoichiometric air-fuel ratio.

The second exhaust, purification system of an internal combustion engine of the present invention is provided with an NO_{X} reduction catalyst which is arranged in an engine exhaust passage and which has the function of absorbing NO_{X} which is contained in exhaust gas when an air-fuel ratio of inflowing exhaust gas is lean, releasing the absorbed when the air-fuel ratio, of the inflowing exhaust gas becomes a stoichiometric air-fuel ratio or rich, and selectively reducing the NO_{X}, a three-way catalyst which is arranged downstream of the NO_{X} reduction catalyst, a reducing agent feed device which feeds a reducing agent to the NO_{X} reduction catalyst, and an air-fuel ratio reducing device which reduces the air-fuel ratio of the exhaust gas flowing into the three-way catalyst. In the operating region of the internal combustion engine, there is a specific operating region in which the air-fuel ratio of the exhaust gas flowing into the NO_{X} reduction catalyst is lean, at the NO_{X} reduction catalyst, the NO_{X} purification rate due to the selective reduction gradually decreases along with a temperature rise and, at the three-way catalyst, the NO_{X} purification rate gradually increases along with a temperature rise. In this specific operating region, when the NO_{X} purification rate of the NO_{X} reduction catalyst becomes smaller than a predetermined judgment value, the reducing agent feed device feeds the reducing agent to the NO_{X} reduction catalyst for selective reduction of NO_{X}, and the air-fuel ratio reducing device makes the air-fuel ratio of the exhaust gas flowing into the three-way catalyst the stoichiometric air-fuel ratio or rich for reduction of NO_{X}. Due to this constitution, it is possible to suppress a drop it the purification ability or nitrogen oxides.

In this invention, the system is further provided with a temperature raising device which raises a temperature of an NO_{X} reduction catalyst and with an absorption amount detection device which detects an absorption amount of NO_{X} of an NO_{X} reduction catalyst. If the air-fuel ratio of the exhaust gas flowing into the NO_{X} reduction catalyst is lean, when a temperature of ain NO_{X} reduction catalyst is lower than a judgment value or a low temperature side for selective reduction and an absorption amount of NO_{X} of an NO_{X} reduction catalyst is an allowable value or more, the temperature raising device may be used to raise the NO_{X} reduction catalyst, then the reducing agent feed device may feed the reducing agent to the NO_{X} reduction catalyst for selective reduction of the NO_{X}.

In this invention, if the air-fuel ratio of the exhaust gas flowing into the NO_{X} reduction catalyst is lean, when the temperature of an NO_{X} reduction catalyst is higher than a judgment value of a high temperature side for selective reduction, it is possible to make the air-fuel ratio of the exhaust gas flowing into the three-way catalyst the stoichiometric air-fuel ratio or rich to reduce the NO_{X} at the three-way catalyst.

### Brief Description of Drawings

FIG. 1 is a schematic view of an internal combustion engine of an embodiment.
FIG. 2 is an enlarged schematic cross-sectional view of an NO_{X} selective reduction catalyst.
FIG. 3 shows graphs for explaining the properties of an NO_{X} selective reduction catalyst and a three-way catalyst in a first embodiment.
FIG. 4 is a graph for explaining an operating region of an exhaust purification system in a first embodiment.
FIG. 5 is a first flow chart for explaining control of an exhaust purification system in a first embodiment.
FIG. 6 is a second flow chart for explaining control of an exhaust purification system in a first embodiment.
FIG. 7 is a graph for explaining the relationship between an NO_{X} adsorption amount and an adsorption speed in an NO_{X} selective reduction catalyst.
FIG. 8 is a map of an NO_{X} amount which is exhausted from an engine body per unit time as a function of the engine speed and amount of injection of fuel in a combustion chamber.
FIG. 9 is a map of an NO_{X} amount which is adsorbed per unit time as a function of a bed temperature of an NO_{X} selective reduction catalyst and an NO_{X} amount which flows into the NO_{X} selective reduction catalyst.
FIG. 10 is an explanatory view of an injection pattern at a time of normal operation.
FIG. 11 is an explanatory view of an injection pattern at the time of after injection in a combustion chamber.
FIG. 12 is a graph for explaining an NO_{X} purification rate of an exhaust purification system, in a first embodiment.
FIG. 13 is an enlarged schematic cross-sectional view of an NO_{X} storage reduction catalyst.
FIG. 14 is an explanatory view of an injection pattern at the time of post injection in a combustion chamber.
FIG. 15 is a graph for explaining the relationship between an air-fuel ratio of the exhaust gas and desorption of NO_{X} in an NO_{X} selective reduction catalyst.
FIG. 16 is a graph for explaining a first operating example in an exhaust purification system of an internal combustion engine in a second embodiment.
FIG. 17 is a flow chart for explaining control of a first operating engine of an exhaust purification system in a second embodiment.
FIG. 18 is a time chart for explaining a second operating example of an exhaust purification system in a second embodiment.

### Best Mode for Carrying Out Invention

### First Embodiment

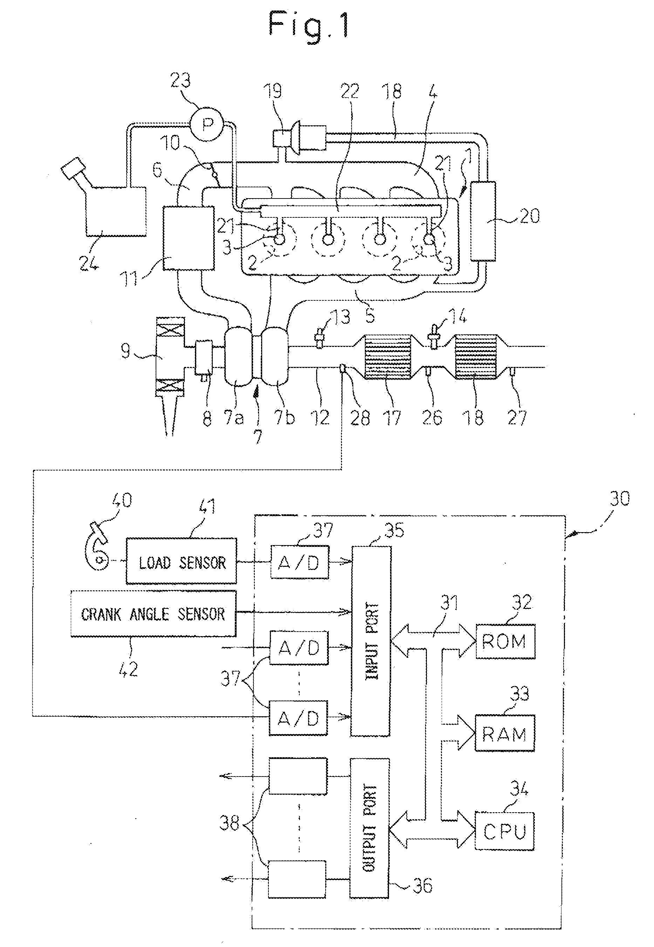

Referring to FIG. 1 to FIG. 14, an exhaust purification system of an internal combustion engine in a first embodiment will be explained.

FIG. 1 is an overall view of an internal combustion engine in the present embodiment. In the present embodiment, the explanation will be made taking as an example a compression ignition type diesel engine. The internal combustion engine is provided with an engine body 1. Further, the internal combustion engine is provided with an exhaust purification system. The engine body 1 includes cylinders constituted by combustion chambers 2, electronically controlled fuel injectors 3 for injecting fuel to the respective combustion chambers 2, an intake manifold 4, and an exhaust manifold 5.

The intake manifold 4 is connected through an intake duct 6 to an outlet of a compressor 7a of an exhaust turbocharged 7. An inlet of the compressor 7a is connected through an intake air detector 8 to an air cleaner 9. Inside the intake duct 6, a throttle valve 10 which is driven by a step motor is arranged. Furthermore, around the intake duct 6, a cooling device 11 is arranged for cooling the intake air which flows through the inside of the intake duct 6. In the embodiment shown in FIG. 1, the engine cooling water is guided to the cooling device 11. The engine cooling water is used to cool the intake air.

On the other hand, the exhaust manifold 5 is connected to an inlet of an exhaust turbine 7b of the exhaust turbocharger 7. An outlet of the exhaust turbine 7b is connected to an exhaust purification system. The exhaust purification system is a system which can purify exhaust gas which is exhausted from the engine body 1.

The exhaust purification system in the present embodiment includes an NO_{X} reduction catalyst constituted by an NO_{X} selective reduction catalyst (SCR) 17. The NO_{X} selective reduction catalyst 17 can selectively reduce the NO_{X} by feeding a reducing agent. The NO_{X} selective reduction catalyst 17 is connected through an exhaust pipe 12 to the outlet of the exhaust turbine 7b. Further, the exhaust purification system in the present embodiment includes a three-way catalyst 18. The three-way catalyst 18 is arranged in the engine exhaust passage at the downstream side of the NO_{X} selective reduction catalyst 17. The three-way catalyst 18 can oxidize CO and HC and, furthermore, reduce the NO_{X}.

In the engine exhaust passage upstream of the NO_{X} selective reduction catalyst 17, that is, in the exhaust pipe 12, a fuel addition valve 13 is arranged as a reducing agent feed device for feeding reducing agent to the NO_{X} selective reduction catalyst 17. In the present embodiment, the fuel of the engine body 1 is used as a reducing agent. The fuel addition valve 13 is formed so as to have a fuel feed action which feeds or stops the feed of fuel. The fuel addition valve 13 in the present embodiment is formed so as to inject fuel.

In the engine exhaust passage at the upstream side of the three-way catalyst 18, an air-fuel ratio reducing device constituted by a fuel addition valve 14 is arranged. Here, in the present invention, the ratio of the air and fuel (hydrocarbons) of the exhaust gas which was fed to the engine intake passage, combustion chambers, or engine exhaust passage is called the air-fuel ratio of the exhaust gas (A/F). The fuel addition valve 14 can feed fuel to the engine exhaust passage so as to reduce the air-fuel ratio of the exhaust gas flowing to the three-way catalyst 18. The fuel addition valve 14 in the present embodiment is formed so as to inject fuel of the engine body 1.

Between the exhaust manifold 5 and the intake manifold 4, an EGR passage 18 is arranged for exhaust gas recirculation (EGR). Inside the EGR passage 18, an electronically controlled EGR control valve 19 is arranged. Further, around the EGR passage 18, a cooling device 20 is arranged for cooling the EGR gas which flows through the inside of the EGR passage 18. In the embodiment shown in FIG. 1, the engine cooling water is guided to the inside of the cooling device 20. The engine cooling water is used to cool the EGR gas.

These fuel injectors 3 are connected through fuel feed tubes 21 to the common rail 22. The common rail 22 is connected through an electronically controlled variable discharge fuel pump 23 to the fuel tank 24. The fuel which is stored in the fuel tank 24 is fed by the fuel pump 23 to the common rail 22. The fuel which was fed to the inside of the common rail 22 is fed through these fuel feed tubes 21 to the fuel injectors 3.

The electronic control unit 30 is comprised of a digital computer. The electronic control unit 30 in the present embodiment functions as a control device of the exhaust purification system. The electronic control unit 30 includes components mutually connected by a bidirectional bus 31 such as a ROM (read only memory) 32, RAM (random access memory) 33, CPU (microprocessor) 34, input port 35, and output port 36.

Downstream of the NO_{X} selective reduction catalyst 17, a temperature sensor 26 is arranged as a temperature detection device for detecting the temperature of the NO_{X} selective reduction catalyst 17. Downstream of the three-way catalyst 18, a temperature sensor 27 is arranged as the temperature detection device for detecting the temperature of the three-way catalyst 18. Upstream of the NO_{X} selective reduction catalyst 17, an air-fuel ratio sensor 28 is arranged for detecting the air-fuel ratio of the exhaust gas flowing into the NO_{X} selective reduction catalyst 17. The output signals of these temperature sensors 26 and 27 and air-fuel ratio sensor 28 are input through corresponding AD converters 37 to the input port 35.

An output signal of the intake air detector 8 is input through a corresponding AD converter 37 to the input port 35. The accelerator pedal 40 has a load sensor 41 connected to it to generate output voltage which is proportional to an amount of depression of the accelerator pedal 40. An output voltage of the load sensor 41 is input through a corresponding AD converter to the input port 35. Furthermore, the input port 35 has a crank angle sensor 32 connected to it for generating an output pulse every time the crankshaft rotates by for example 15°. The output of the crank angle sensor 42 can be used to detect the rotational speed of the engine body.

On the other hand, the output port 36 is connected through corresponding drive circuits 38 to the fuel injectors 3, a step motor for driving the throttle valve 10, EGR control valve 19, and fuel pump 23. Furthermore, the output port 36 is connected through corresponding drive circuits 38 to the fuel addition valves 13 and 14. The fuel addition valves 13 and 14 in the present embodiment are controlled by the electronic control unit 30.

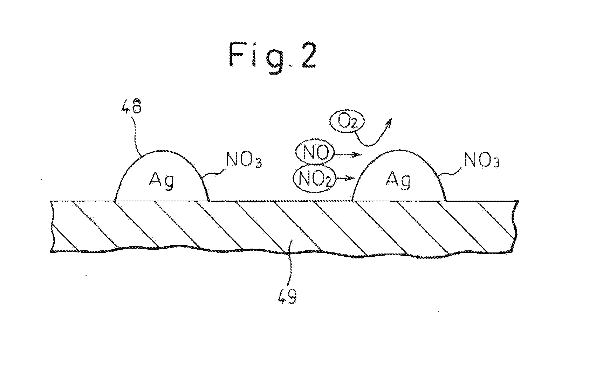

FIG. 2 is an enlarged schematic cross-sectional view of an NO_{X} selective reduction catalyst in the present embodiment. The NO_{X} selective reduction catalyst 17 of the present embodiment selectively reduces the NO_{X} by feeding a reducing agent constituted by HC. The NO_{X} selective reduction catalyst 17 includes a catalyst metal 48 for promoting a reduction reaction of NO_{X}. The catalyst metal 48 in the present embodiment is formed from silver (Ag). The catalyst metal is not limited to this embodiment. It may be any metal enabling selective reduction of NO_{X}. As the catalyst metal, for example, platinum (Pt), palladium (Pd), rhodium (Rh), iridium (Ir), or another precious metal or copper (Cu), iron (Fe), cobalt (Co), nickel (Ni), or another base metal may be used.

The NO_{X} selective reduction catalyst includes a catalyst carrier 49 for holding the catalyst metal 48. The catalyst carrier 49 in the present embodiment is formed on the surface of a substrate. The catalyst carrier 49 is, for example, formed from zeolite or aluminum oxide (Al₂O₃) or other porous substance.

The NO_{X} selective reduction catalyst has the function, in a predetermined temperature region, of selectively reducing the NO_{X} in the presence of a suitable amount of HC or other reducing agent. The NO_{X} is broken down into N₂ and O₂ by reduction. Furthermore, when the air-fuel ratio of the exhaust gas is lean, in a predetermined temperature region, the catalyst metal 48 of the selective reduction catalyst adsorbs the NO_{X}. The NO_{X} is, for example, adsorbed at the catalyst metal in the form of silver nitrate. The temperature region at which the NO_{X} is adsorbed is generally a region lower than the temperature region at which the NO_{X} is selectively reduced. Further, the NO_{X} selective reduction catalyst releases the adsorbed NO_{X} when the air-fuel ratio of the inflowing exhaust gas becomes the stoichiometric air-fuel ratio or rich.

The three-way catalyst includes, as the catalyst metal, platinum (Pt), palladium (Pd), rhodium (Rh), or other precious metal. The precious metal is supported on aluminum oxide or another catalyst carrier. The catalyst carrier is, for example, formed on the surface of a honeycomb-shaped cordierite or other substrate. The three-way catalyst purifies the three components of HC, CO, and NO_{X} with a high efficiency by the air-fuel ratio of the inflowing exhaust gas being made about the stoichiometric air-fuel ratio. The three-way catalyst falls in NO_{X} reduction ability when the air-fuel ratio of the inflowing exhaust becomes higher than the stoichiometric air-fuel ratio. That is, when the air-fuel ratio of the inflowing exhaust gas becomes lean, the NO_{X} purification rate falls.

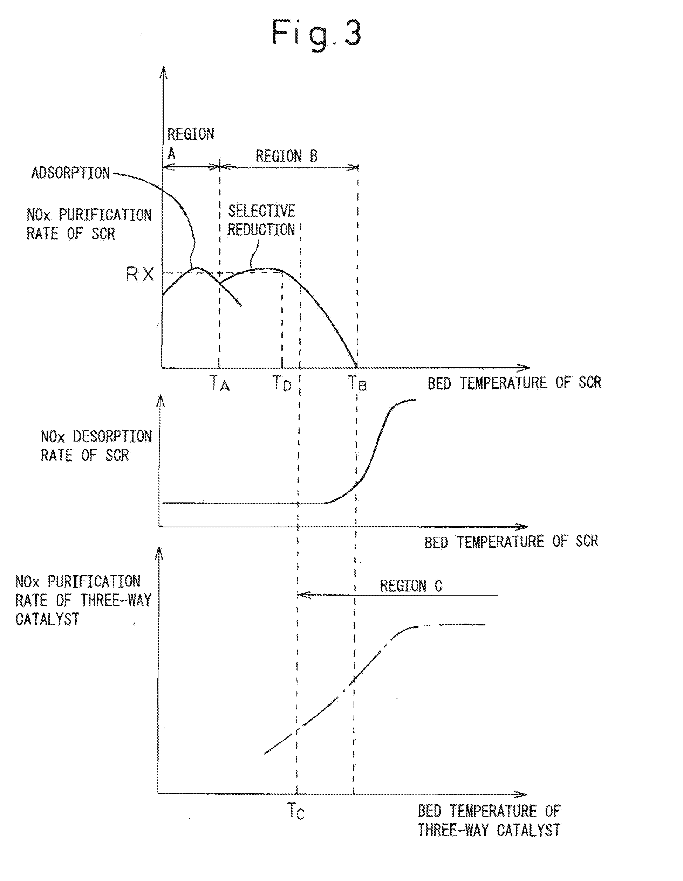

FIG. 3 shows graphs for explaining the purification rate of NO_{X} of the NO_{X} selective reduction catalyst and three-way catalyst in the present embodiment. The top two graphs show the properties of the NO_{X} selective reduction catalyst. The bottom most graph shows the property of the three-way catalyst. The graph of the NO_{X} selective reduction catalyst shows the property at the time of the state where the air-fuel ratio of the inflowing exhaust gas is lean. The graph of the three-way catalyst shows the property at the time when the air-fuel ratio of the inflowing exhaust gas is the stoichiometric air-fuel ratio or rich.

Here, in the present invention, "purification of NO_{X}" shows the removal of NO_{X} from the inside of the exhaust gas and includes the meanings of both absorption of NO_{X} and reduction of NO_{X}. Further, in the present invention, "absorption" includes physical adsorption, chemical absorption, storage, and deposition.

The NO_{X} selective reduction catalyst can adsorb NO_{X} by the catalyst metal when the bed temperature is low. In the operating region, the region A is the region where adsorption is used to purify the NO_{X}. In the present embodiment, in the region where the purification rate of NO_{X} by adsorption is higher than the purification rate of NO_{X} by selective reduction, adsorption is used to purify the NO_{X}. The temperature T_{A} is the bed temperature when the purification rate of NO_{X} by selective reduction and the purification rate of NO_{X} by adsorption become the same. The region A is the operating region where the bed temperature of the NO_{X} selective reduction catalyst is less than the temperature T_{A}.

In the operating region, the region B is the region where the NO_{X} selective reduction catalyst selectively reduces the NO_{X}. In the present embodiment, as the region B, a region where the purification rate of NO_{X} by selective reduction becomes the purification rate of NO_{X} by adsorption or more is selected. The region B is the region where the bed temperature of the NO_{X} selective reduction catalyst is the temperature T_{A} to the temperature T_{B}. The judgment value of the temperature of the low temperature side of the region B is the temperature T_{A}, while the judgment value of the temperature of the high temperature side is the temperature T_{B}. The purification rate of NO_{X} by selective reduction gradually falls as the temperature T_{B} is approached. Referring to FIG. 1, in the present embodiment, it is possible for the fuel addition valve 13 to feed a reducing agent constituted by fuel so as to selectively reduce the NO_{X}.

The range of the region B for selective reduction is not limited to the above. It is possible to select any temperature range. For example, as the temperature of the low temperature side T_{A} used as the judgment value, it is possible to employ the temperature where the purification rate of NO_{X} by adsorption falls to a predetermined value.

In this regard, if the bed temperature of the NO_{X} selective reduction catalyst rises, the NO_{X} which was adsorbed at the catalyst metal is desorbed. The bed temperature at which the NO_{X}, is desorbed from the NO_{X} selective reduction catalyst is within the region where the purification rate of NO_{X} by selective reduction becomes smaller. In this temperature region, the selective reduction function of the NO_{X} selective reduction catalyst falls and the resorption rate of the NO_{X} becomes larger.

On the other hand, the three-way catalyst has an activation temperature for purifying the NO_{X}. As the temperature becomes higher from the activation temperature, the purification rate of NO_{X} gradually becomes higher. At a predetermined temperature, the purification rate becomes constant. In the present embodiment, the operating region above a temperature T_{C}, which is higher than the activation temperature and which can achieve a predetermined NO_{X} purification rate, is made the region C. In the region C, it is possible to efficiently reduce the NO_{X} by the three-way catalyst. The selection of the region C, that is, the selection of the temperature T_{C}, is not limited to this mode. It is possible to select any region where a three-way catalyst can be used to reduce the NO_{X}.

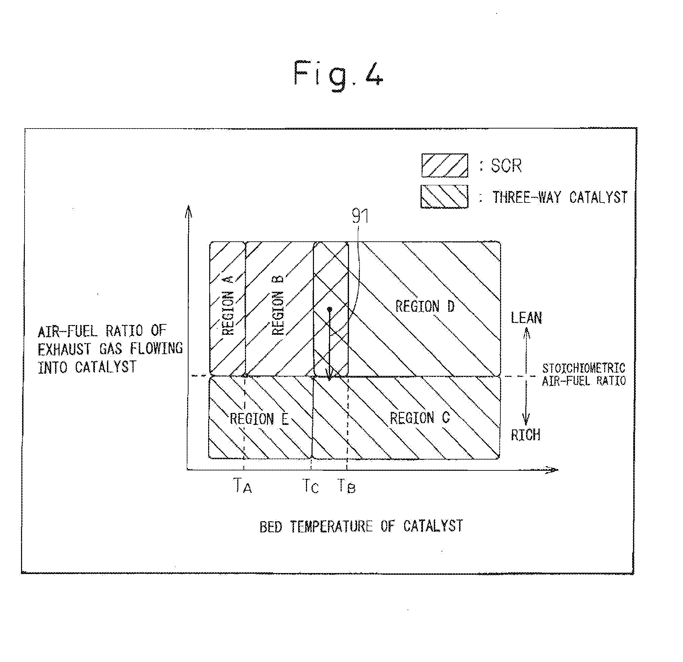

FIG. 4 shows a graph for explaining the operating region in the exhaust purification system in the present embodiment. FIG. 4 shows a graph which schematically shows the relationship between the bed temperatures of the catalysts of the NO_{X} selective reduction catalyst or three-way catalyst and the air-fuel ratios of the exhaust gas flowing to the respective catalysts. The abscissa shows the bed temperatures of these catalysts. The ordinate shows the air-fuel ratios of the exhaust gas flowing to the respective catalysts.

The operating region is divided into the region A, region B, and region C plus the region D and region E. The region D is the region where the air-fuel ratio of the exhaust gas flowing into the three-way catalyst is lean and the bed temperature of the three-way catalyst is the temperature T_{C} or more. The region E is the region where the air-fuel ratio of the exhaust gas flowing into the three-way catalyst is the stoichiometric air-fuel ratio or rich and the temperature is lower than the temperature T_{C}.

Referring to FIG. 1, in the internal combustion engine of the present embodiment, at the time of normal operation, the air-fuel ratio of the exhaust gas exhausted from the engine body 1 is lean. Further, in the present embodiment, the bed temperature of the NO_{X} selective reduction catalyst 17 and the bed temperature of the three-way catalyst 18 are substantially the same. When the operating region of the internal combustion engine is the region A and region B, mainly the NO_{X} selective reduction catalyst is used to purify the NO_{X}. In the region C, region D, and region E, mainly the three-way catalyst is used to purify the NO_{X.}

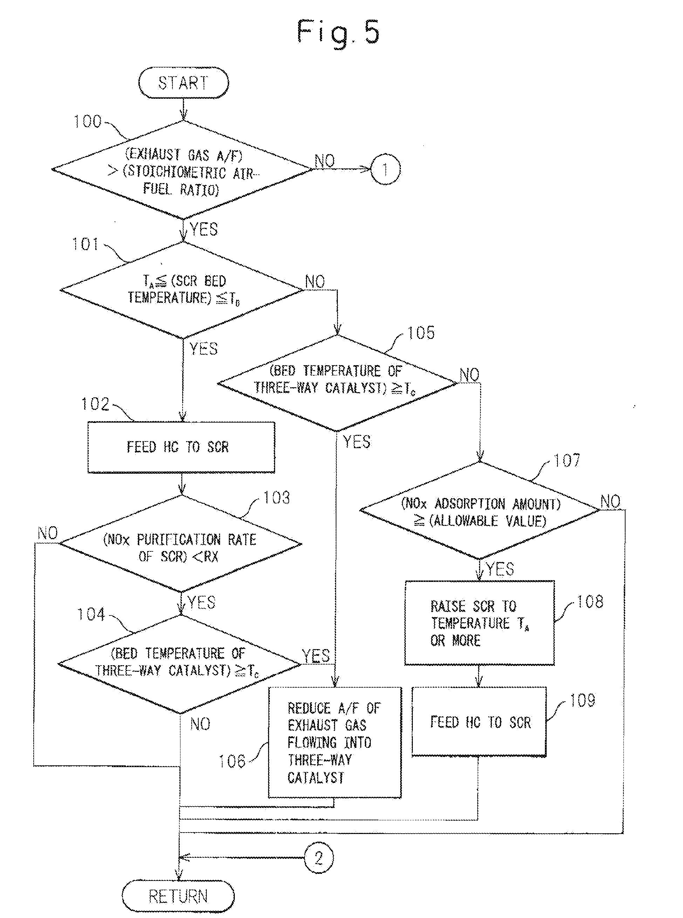

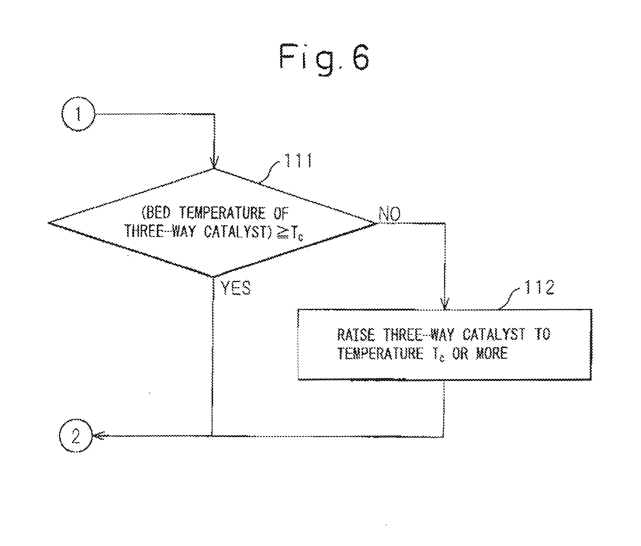

FIG. 5 and FIG. 6 show flow charts for explaining control in the exhaust purification system in the present embodiment. FIG. 6 is the flow chart for explaining control at the time when the air-fuel ratio of the exhaust gas flowing into the NO_{X} selective reduction catalyst is the stoichiometric air-fuel ratio or rich.

First, at step 100, it is judged if the air-fuel ratio of the exhaust gas which is exhausted from the engine body 1 is larger than the stoichiometric air-fuel ratio. That is, it is judged if the air-fuel ratio of the exhaust gas flowing into the NO_{X} selective reduction catalyst 17 is lean. In the present embodiment, the air-fuel ratio sensor 28 is used to detect the air-fuel ratio of the exhaust gas flowing into the NO_{X} selective reduction catalyst 17.

When, at step 100, the air-fuel ratio of the exhaust gas is lean, the routine proceeds to step 101. At step 101, it is judged if the bed temperature of the NO_{X} selective reduction catalyst is within a range from the temperature T_{A} to the temperature T_{B}. That is, it is judged if the operating state of the exhaust purification system is in the range of the region B. In the present embodiment, the temperature sensor 26 which is arranged downstream of the NO_{X} selective reduction catalyst is used to detect the bed temperature of the NO_{X} selective reduction catalyst 17.

When, at step 101, the bed temperature of the NO_{X} selective reduction catalyst is not within the range from the temperature T_{A} to the temperature T_{B}, the routine proceeds to step 105. At step 105, it is judged if the bed temperature of the three-way catalyst 18 is the temperature T_{C} or more. That is, it is judged if the operating state of the exhaust purification system is in the range of the region D. In the present embodiment, the temperature sensor 27 which is arranged downstream of the three-way catalyst 18 is used to detect the bed temperature of the three-way catalyst 18.

If the bed temperature of the three-way catalyst is less than the temperature T_{C}, it is judged that the operating state of the exhaust purification system is in the legion A and the routine proceeds to step 107. In this way, in the present embodiment, when the air-fuel ratio of the exhaust gas flowing into the NO_{X} selective reduction catalyst is lean, it is judged that the operating state is any region of the region A, region B, or region C.

When, at step 101, it is judged if the bed temperature of the NO_{X} selective reduction catalyst is within the range from the temperature T_{A} to the temperature T_{B}, the routine proceeds to step 102, The operating state is in the range of the region B. At step 102, fuel is fed from the fuel addition valve 13 to enable the NO_{X} selective reduction catalyst 17 to selectively reduce the NO_{X}.

Next, at step 103, it is judged if the purification rate of the NO_{X} selective reduction catalyst is less than a predetermined judgment value RX. Referring to FIG. 3, in the present embodiment, as this judgment value, the purification rate RX is employed. The temperature T_{D} is the bed temperature when the NO_{X} purification rate becomes RX. In the present embodiment, it is judged if the bed temperature of the NO_{X} selective reduction catalyst is larger than the temperature T_{D}. When, at step 103, the purification rate of NO_{X} is RX or more, it is judged that purification by selective reduction is sufficient and this control is ended, When the purification rate of NO_{X} is less than RX, the routine proceeds to step 104. That is, when the bed temperature on the NO_{X} selective reduction catalyst is larger than the temperature T_{D}, the routine proceeds to step 104.

At step 104, it is judged if the bed temperature of the three-way catalyst is the temperature T_{C} or more. When the bed temperature of the three-way catalyst is less than the temperature T_{C}, this control is ended. In this way, referring to FIG. 4, when the exhaust purification system is operating in the region in the region B which does not overlap with the region D, the NO_{X} is selectively reduced to purify the NO_{X}.

Referring to FIG. 5, when, at step 104, it is judged that the bed temperature of the three-way catalyst is the temperature T_{C} or more, the routine proceeds to step 106. Referring to FIG. 4, when the exhaust purification system is operating in the region where the region B and the region D overlap, the routine proceeds to step 106. At step 106, control is performed to lower the air-fuel ratio of the exhaust slowing into the three-way catalyst.

In the present embodiment, referring to FIG. 1, fuel is fed from the fuel addition valve 14 which is arranged at the upstream side of the three-way catalyst 18 to control the air-fuel ratio of the exhaust gas flowing into the three-way catalyst to the stoichiometric air-fuel ratio. As shown by the arrow 91 in FIG. 4, the operating state shifts from the region where the region B and the region D overlap to the region C. By controlling the air-fuel ratio of the exhaust gas flowing into the three-way catalyst to the stoichiometric air-fuel ratio, it is possible to purify the NO_{X} at the three-way catalyst as well.

Referring to FIG. 3, in the region in the region B where the temperature is high, the purification rate of NO_{X} by selective reduction falls. Furthermore, desorption of NO_{X} from the NO_{X} selective reduction catalyst can occur. For this reason, with purification of NO_{X} by only the upstream side NO_{X} selective reduction catalyst, the purification rate becomes low. However, when the bed temperature of the three-way catalyst is the temperature T_{C} or more, it is possible to make the air-fuel ratio of the exhaust gas the stoichiometric air-fuel ratio to enable the three way catalyst to also purify the NO_{X}. In this way, in the region where the region B and the region D overlap, both the upstream side NO_{X} selective reduction catalyst and the downstream side three-way catalyst can be used to reduce the NO_{X} to raise the purification rate of NO_{X}.

Next, referring to FIG. 5, when, at step 105, the bed temperature of the three-way catalyst, is the temperature T_{C} or more, the routine proceeds to step 106. When, at step 106, controlling the air fuel ratio of the exhaust gas flowing into the three-way catalyst to the stoichiometric air-fuel ratio, the NO_{X} is purified by the three-way catalyst. Referring to FIG. 4, when the exhaust purification system is operating in the region in the region D which does not overlap with the region B, the three-way catalyst is used to purify the NO_{X}.

At step 106 of the present embodiment, control is performed so that the air-fuel ratio of the exhaust gas flowing into the three-way catalyst becomes the stoichiometric air-fuel ratio, but the invention is not limited to this embodiment. Control may also be performed so that the air-fuel ratio of the exhaust gas flowing into the three-way catalyst becomes rich. However, the three-way catalyst is preferably controlled to the stoichiometric air-fuel ratio so that the purification rates of CO, HC, and NO_{X} become higher under conditions of an air-fuel ratio of the inflowing exhaust gas of the stoichiometric air-fuel ratio.

When, at step 105, the bed temperature of the three-way catalyst is less than the temperature T_{C}, the routine proceeds to step 107. When the operating state shown in FIG. 4 is the region A, the NO_{X} selective reduction catalyst adsorbs NO_{X} so as to purify the NO_{X}. In this regard, in the NO_{X} selective reduction catalyst, sometimes the NO_{X} adsorption amount is large, so the NO_{X} adsorption rate becomes small. At step 107, it is judged if the NO_{X} adsorption amount which is adsorbed at the NO_{X} selective reduction catalyst is a predetermined allowable value or more.

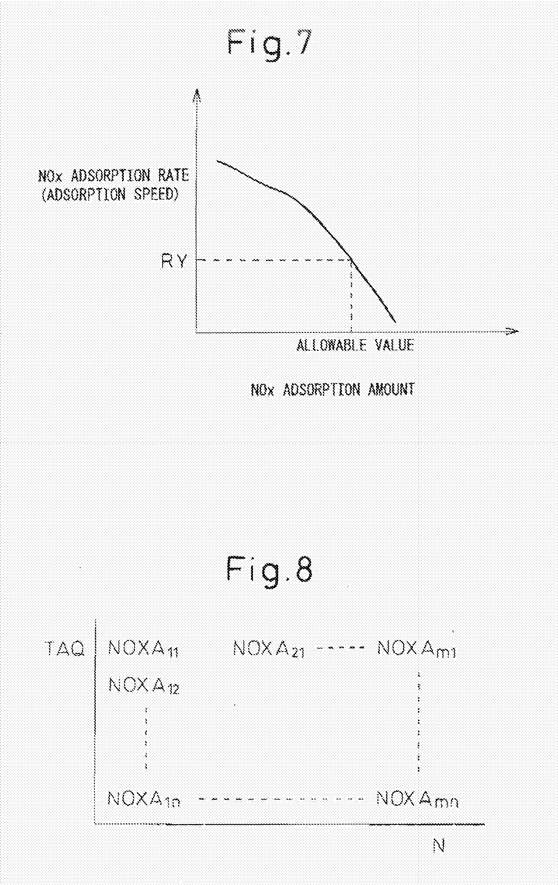

FIG. 7 shows a graph for explaining the relationship between the NO_{X} adsorption amount and adsorption rate in the NO_{X} selective reduction catalyst. It is learned that if the NO_{X} adsorption amount increases, the adsorption rate of NO_{X} decreases. In the present embodiment, the point of the adsorption rate RY where the adsorption speed of the NO_{X} becomes slowed to a predetermined value is made the allowable value of the NO_{X} adsorption amount at step 107. The exhaust purification system in the present embodiment is provided with an absorption amount detection device which detects the NO_{X} absorption amount of the NO_{X} selective reduction catalyst. Next, the absorption, amount detection device in the present embodiment will be explained.

FIG. 8 shows a map of the NO_{X} amount which is exhausted from the engine body per unit time in the present embodiment. For example, a map of the released amount NOXA of NO_{X} per unit time is prepared in advance as a function of the engine speed N and the injection amount TAQ of fuel which is injected into the combustion chambers 2. This map is, for example, built in the ROM 32 of the electronic control unit 30. In the present embodiment, the NO_{X} amount which is exhausted from the engine body 1 and the NO_{X} amount which flows into the NO_{X} selective reduction catalyst become equal. Using this map, it is possible to calculate the NO_{X} amount flowing into the NO_{X} selective reduction catalyst per unit time which is calculated in accordance with the operating state. Next, the NO_{X} adsorption amount is calculated from the NO_{X} amount flowing into the NO_{X} selective reduction catalyst.

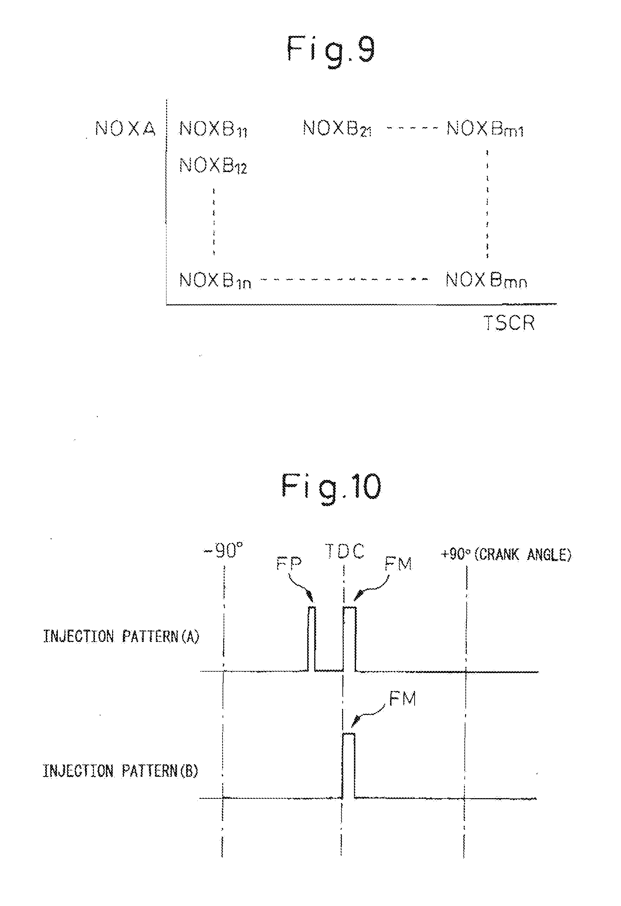

FIG. 9 shows a map of the NO_{X} adsorption amount which is adsorbed in the NO_{X} selective reduction catalyst per unit time in the present embodiment. For example, a map of the NO_{X} adsorption amount NOXB per unit time is prepared in advance as a function of the bed temperature TSCR of the NO_{X} selective reduction catalyst and the NO_{X} amount NOXA flowing into the selective reduction catalyst. This map is, for example, built in the ROM 32 of the electronic control unit 30. Using this map, it is possible to calculate the NO_{X} adsorption amount per unit time which is calculated in accordance with the operating state. By cumulatively adding the NO_{X} adsorption amount per unit time, it is possible to calculate the NO_{X} amount which is adsorbed at the NO_{X} selective reduction catalyst at any time.

The absorption amount detection device which detects the absorption amount of NO_{X} is not limited to this mode. Any configuration may be used to detect the absorption amount of NO_{X}. For example, NO_{X} sensors are arranged at the upstream side and the downstream side of the NO_{X} selective reduction catalyst. These detect the NO_{X} amount flowing into the NO_{X} selective reduction catalyst per unit time and the NO_{X} amount flowing out from the NO_{X} selective reduction catalyst per unit time. It is possible to use the difference in outputs of these NO_{X} sensors to calculate the NO_{X} amount which is absorbed in the NO_{X} selective reduction catalyst per unit time.

Referring to FIG. 5, when, at step 107, the NO_{X} adsorption amount is less than the allowable value, this control is ended. That is, in the region A of FIG. 4, when the adsorbable amount of NO_{X} is larger than a predetermined value, adsorption by the NO_{X} selective reduction catalyst is used to purify the NO_{X}. When, at step 107, the NO_{X} adsorption amount is the allowable value or more, the routine proceeds to step 108.

At step 108, the NO_{X} selective reduction catalyst is raised in temperature from the region A to the region B. That is, the NO_{X} selective reduction catalyst is raised in temperature in the temperature region where it is possible to obtain a sufficient purification rate of NO_{X} by selective reduction of NO_{X}. Referring to FIG. 3, for example, the bed temperature of the NO_{X} selective reduction catalyst is raised to within a range from the temperature T_{A} to the temperature T_{D}.

The exhaust purification system in the present embodiment include a temperature raising device for raising the temperature of the NO_{X} selective reduction catalyst. The temperature raising device in the present embodiment includes the fuel injectors 3 and the electronic control unit 30 of the engine body 1. The injection pattern in the combustion chambers 2 of the engine body 1 is changed to raise the temperature of the exhaust gas exhausted from the engine body 1. By raising the temperature of the exhaust gas, NO_{X} selective reduction catalyst 17 is also raised in temperature. Here, the change of the injection pattern in the combustion chambers will be explained.

FTG. 10 shows the injection pattern of fuel at the time of normal operation of the internal combustion engine in the present embodiment. The injection pattern A is an injection pattern of fuel at the time of normal operation. At the time of normal operation, the main injection FM is performed at about compression top dead center TDC. The main injection FM is performed at a crank angle of about 0°. Further, to stabilise the combustion in the main injection FM, pilot injection FP is performed before the main injection FM. The pilot injection FP, for example, is performed in a range of crank angle from about 10° to about 40° before compression top dead center TDC. At the time of normal operation, as shown by the injection pattern B, it is also possible not to perform pilot injection FP and to perform only main injection FM. In the present embodiment, the explanation is given with reference to the example of an injection pattern at which pilot injection FP is performed. At the time of normal operation, when being operated by the injection pattern A, the air-fuel ratio of the exhaust gas which is exhausted from the engine body is lean.

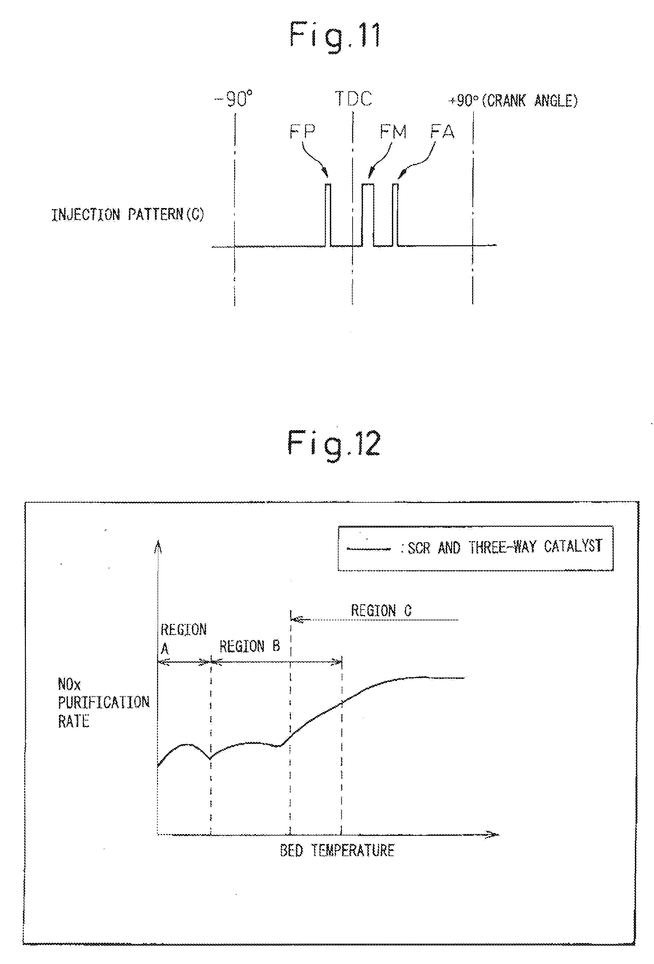

FIG. 11 shows the injection pattern when raising the temperature of the exhaust gas which is exhausted from the engine body. In the injection pattern C, the injection timing of the main injection FM is retarded from compression top dead center TDC. That is, the injection timing of the main injection FM is retarded. Along with the retardation of the injection timing of the main injection FM, the injection timing of the pilot injection FP is also retarded. By retarding the injection timing of the main injection FM, it is possible to raise the temperature of the exhaust gas.

Furthermore, after the main injection FM, as auxiliary injection, after injection A is performed. The after injection FA is performed in a combustible period of time after the main injection. The after injection FA is, for example, performed in the range of a crack angle after compression top dead center up to about 40°. For example, this is performed in the range of a crank angle after compression top dead center of about 20° to about 30°. By performing after injection FA, the afterburn period becomes longer, so the temperature of the exhaust gas can be raised. By changing the injection pattern in the combustion chamber in this way, it is possible to raise the temperature of the exhaust gas which is exhausted from the engine body. The temperature raising device for raising the temperature of the NO_{X} selective reduction catalyst is not limited to this mode. It is possible to employ any device which can raise the temperature of an NO_{X} reduction catalyst.

Referring to FIG. 5, at step 108, the NO_{X} selective reduction catalyst is raised in temperature to the region B, then the routine proceeds to step 109. At step 109, the fuel addition valve 13 of the upstream side of the NO_{X} selective reduction catalyst is used to add fuel to thereby selectively reduce the NO_{X}. In this way, the NO_{X} is purified by selective reduction at the region B shown in FIG. 4.

In the present embodiment, if the exhaust purification system is operating in the region A, the NO_{X} selective reduction catalyst reduces the NO_{X} when the NO_{X} adsorption amount becomes the allowable value or more, but the invention is not limited to this embodiment. A three-way catalyst may also be used for reduction. For example, the temperature of the three-way catalyst is raised to the activation temperature or more. Furthermore, it is possible to make the air-fuel ratio of the exhaust gas flowing into the three-way catalyst the stoichiometric air-fuel ratio or rich so as to reduce the NO_{X} at the three-way catalyst. At this time, when the temperature of the NO_{X} selective reduction catalyst becomes the NO_{X} release temperature or more, the NO_{X} which is adsorbed at the NO_{X} selective reduction catalyst is released. The released NO_{X} can be reduced together with the NO_{X} which is exhausted from the engine body at the three-way catalyst.

At step 100 of FIG. 5, when the air-fuel ratio of the exhaust gas flowing into the NO_{X} selective reduction catalyst is the stoichiometric air-fuel ratio or rich, the routine proceeds to step 111 of FIG. 6. At step 111, it is judged if the bed temperature of the three-way catalyst is the temperature T_{C} or more. If the bed temperature of the three-way catalyst is the temperature T_{C} or more, the NO_{X} can already be reduced by the three-way catalyst, so this control is ended. Referring to FIG. 4, in the case where the exhaust purification system, is operating in the region C, the three-way catalyst can purify the NO_{X}. For this reason, the operation in the region C is continued. At this time, the bed temperature of the three-way catalyst has not sufficiently risen, so when not sufficiently activated, it is also possible to raise the temperature of the three-way catalyst. The temperature of the three-way catalyst can be raised, for example, in the same way as the temperature of the NO_{X} selective reduction catalyst is raised, by changing the injection pattern in the combustion chambers.

When, at step 111, the bed temperature of the three-way catalyst is less than the temperature T_{C}, the routine proceeds to step 112. At step 112, the three-way catalyst is raised to the temperature T_{C} or more. Referring to FIG. 4, when the exhaust purification system is operating in the region E, the system is shifted to the region C. The temperature of the three-way catalyst is raised to reduce the NO_{X} at the three-way catalyst.

FIG. 12 shows a graph for explaining the purification rate of NO_{X} in the exhaust purification system in the present embodiment. The abscissa shows the bed temperature of the catalysts. The ordinate show the purification rate of the exhaust purification system as a whole. The exhaust purification system in the present embodiment purifies NO_{X} in the HO_{X} selective reduction catalyst and additionally purifies NO_{X} in the three-way catalyst in the region where the region B and the region C overlap, so can obtain a high purification rate of NO_{X}.

In the present embodiment, the explanation was given with reference to an NO_{X} selective reduction catalyst, which can selectively reduce the NO_{X} by feeding HC, as the NO_{X} reduction catalyst, but the invention is not limited to this embodiment. The NO_{X} reduction catalyst may be any catalyst which has the function of absorbing the NO_{X} which is contained in exhaust gas when the air-fuel ratio of the inflowing exhaust gas is lean, releasing the absorbed NO_{X} when the air-fuel ratio of the inflowing exhaust gas is the stoichiometric air-fuel ratio or rich, and further selectively reducing the NO_{X} For example, the NO_{X} reduction catalyst may include an NO_{X} storage reduction catalyst.

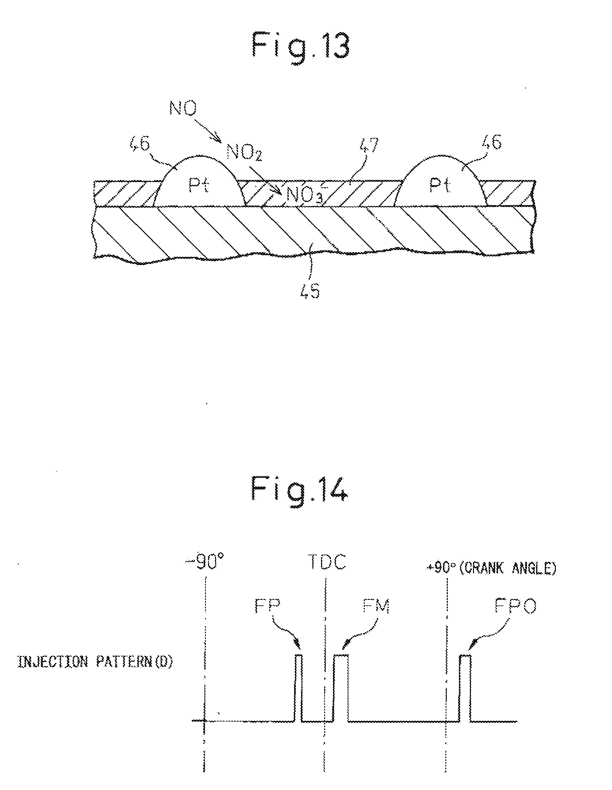

FIG. 13 is an enlarged schematic cross-sectional view of an NO_{X} storage reduction catalyst. The NO_{X} storage reduction catalyst is comprised of a substrate on which for example a catalyst carrier 45 comprised of alumina is formed. On the surface of the catalyst carrier 45, a precious metal 46 is carried dispersed. On the surface of the catalyst carrier 45, a layer of an NO_{X} absorbent 47 is formed. The precious metal 46, for example, includes platinum (Pt). As the ingredients forming the NO_{X} absorbent 47, for example, at least one ingredient selected from potassium (K), sodium (Na), cesium (Cs), or other such alkali metal, barium (Ba), calcium (Ca), or other such alkali earth, or lanthanum (La), yttrium (Y), or other such rare earth is used.

In the NO_{X} storage reduction catalyst, when the air-fuel ratio of the exhaust gas is lean, the NO which is contained in the exhaust gas is oxidized on the precious metal 46 and becomes NO₂. NO₂ is stored in the form of nitrate ions NO₃⁻ inside of the NO_{X} absorbent 47. As opposed to this, when the air-fuel ratio of the exhaust gas is rich or the stoichiometric air-fuel ratio, the nitrate ions N0₃⁻ inside of the NO_{X} absorbent 47 are released in the form of NO₂ from the NO_{X} absorbent 47. The released NO_{X} is seduced to N₂ by the unburned hydrocarbons and carbon monoxide which are contained in the exhaust gas.

The NO_{X} storage reduction catalyst carries a precious metal for causing selective reduction, so can selectively reduce the NO_{X} by the feed of a reducing agent. In particular, even when the NO_{X} storage reduction catalyst has deteriorated, the function of selectively reducing the NO_{X} remains. In this way, the NO_{X} storage reduction catalyst has the function of selectively reducing the NO_{X}, so the present invention can be applied even to a system where the NO_{X} reduction catalyst includes an NO_{X} storage reduction catalyse.

In the present embodiment, as the reducing agent feed device for feeding a reducing agent to the NO_{X} selective reduction catalyst, a fuel addition valve is arranged. The reducing agent feed device is not limited to this mode and may feed a reducing agent top the NO_{X} selective reduction catalyst. For example, the reducing agent feeding means includes the fuel injectors 3 of the engine body 1. It is also possible to change the injection pattern in the combustion chambers so as to feed unburned fuel to the NO_{X} selective reduction catalyst.

FIG. 14 shows the injection pattern when feeding unburned fuel to the NO_{X} selective reduction catalyst. The injection pattern D comprises main injection FM, then post injection FPO. The post injection FPO is injection in which fuel is not burned in the combustion chambers. The post injection FRO is auxiliary injection in the same way as after injection. The after injection has an effect on the engine output, while the post injection does not contribute to the engine output. The post injection FPO is performed, for example, in the range of a crank angle after compression, top dead center of about 90° to about 120°. By performing post injection in the combustion chambers it is possible to feed unburned fuel to the NO_{X} selective reduction catalyst.

Further, in the present embodiment, as an air-fuel ratio reducing device which makes the air-fuel ratio of the exhaust gas flowing into the three-way catalyst smaller, a fuel addition valve is arranged. The air-fuel ratio reducing device is not limited to this mode. It may also be configured to lower the air-fuel ratio of the mixture flowing into the three-way catalyst.

For example, the air-fuel ratio reducing device may include a fuel addition valve arranged at the upstream side of the NO_{X} selective reduction catalyst. By feeding unburned fuel from the upstream side of the NO_{X} selective reduction catalyst, the air-fuel ratio of the exhaust gas flowing into the three-way catalyst can be made smaller, Alternatively, by performing post injection at the combustion chambers, the air-fuel ratio of the exhaust gas flowing into the three-way catalyst can be made smaller. However, if feeding a large amount of unburned fuel to the NO_{X} selective reduction catalyst, sometimes HC poisoning occurs and the NO_{X} selective reduction catalyst falls in purification rate. For this reason, a system for feeding fuel is preferably arranged at the downstream side of the NO_{X} selective reduction catalyst.

Further, an oxygen additive valve for feeding oxygen may be arranged in the engine exhaust passage at the upstream side of the three-way catalyst. For example, an air feed valve may be arranged for seeding air into the engine exhaust passage. The three-way catalyst is designed so as to exhibit a superior oxidation performance and reduction performance near the stoichiometric air-fuel ratio. For this reason, when the air-fuel ratio of the exhaust gas flowing out from the NO_{X} selective reduction catalyst is deeply rich, it is possible to feed air from the air feed valve to make the air-fuel ratio approach the stoichiometric air-fuel ratio. As a result, it is possible to perform superior purification at the three-way catalyst.

### Second Embodiment

Referring to FIG. 1 and FIG. 15 to FIG. 18, an exhaust purification system of an internal combustion engine in a second embodiment can be explained. The configuration of the exhaust purification system of an internal combustion engine in the present embodiment is similar to the exhaust purification system in the first embodiment. Referring to FIG.1, the NO_{X} selective reduction catalyst 17 is arranged in the engine exhaust passage, while the three-way catalyst 18 is arranged downstream of the NO_{X} selective reduction catalyst 17.

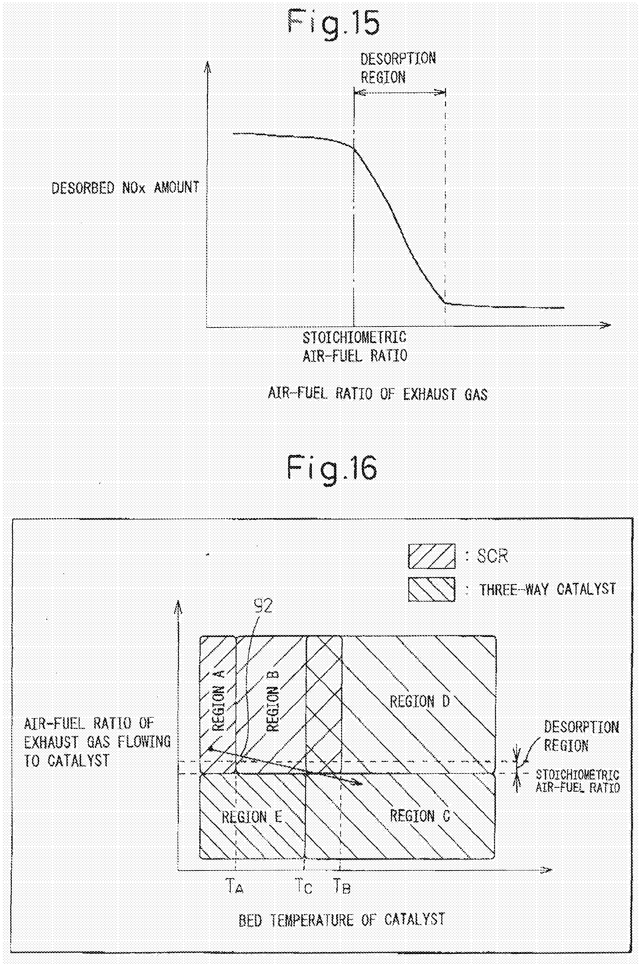

FIG. 15 shows a graph explaining the relationship between the air-fuel ratio of the exhaust gas flowing into the NO_{X} selective reduction catalyst and the NO_{X} amount which is desorbed from the NO_{X} selective reduction catalyst. The inventors discovered that in the slightly lean region near the stoichiometric air-fuel ratio in the region where the air-fuel ratio of the inflowing exhaust gas is lean, the absorbed NO_{X} is desorbed, so the NO_{X} purification rate falls. In the region near the stoichiometric air-fuel ratio, the NO_{X} is gradually desorbed along with the fall of the oxygen concentration. In the present invention, the lean region adjoining the stoichiometric air-fuel ratio where the absorbed NO_{X} is desorbed is called the "desorption region". In the desorption region, for example, the air-fuel ratio of the exhaust gas flowing into the catalyst is about 18 or less, that is, larger than 14.7 (stoichiometric air-fuel ratio).

Referring to FIG. 1, in the present embodiment, when the NO_{X} selective reduction catalyst is operating in the desorption region, the fuel addition valve 13 which is arranged upstream of the NO_{X} selective reduction catalyst 17 is used to feed a reducing agent to the NO_{X} selective reduction catalyst so as to selectively reduce the desorbed NO_{X}.

FIG. 16 shows a graph for explaining a first operating example in the present embodiment. In the first operating example, when operating in the region A, the NO_{X} amount which is adsorbed at the NO_{X} selective reduction catalyst exceeds a predetermined allowable value. At this time, control is performed to make the NO_{X} selective reduction catalyst release the NO_{X} and to reduce the released NO_{X}. In the present embodiment, as shown by the arrow 92, control is performed to make the operating state of the exhaust purification system shift from the region A to the region C.

By making the air-fuel ratio of the exhaust gas flowing into the NO_{X} selective catalyst the stoichiometric air-fuel ratio or rich, the NO_{X} which is absorbed at the NO_{X} selective reduction catalyst is exhausted. In the present embodiment, the NO_{X} is released by shifting the air-fuel ratio of the exhaust gas flowing into the NO_{X} selective reduction catalyst from lean to rich. Further, by making the temperature of the three-way catalyst 18 the activation temperature or more, the released NO_{X} is purified by the three-way catalyst. That is, by shifting from the region A to the region C, NO_{X} is released from the NO_{X} selective reduction catalyst and NO_{X} is reduced at the three-way catalyst.

Referring to FIG. 1, in the present embodiment, after injection is performed, in the combustion chamber 2 in the engine body 1 (see FIG. 11). Furthermore, the throttle valve 10 of the engine intake passage is throttled back to reduce the amount of air flowing into the combustion chamber 2 for rich combustion control. By reducing the opening degree of the throttle valve 10, it is possible to make the air-fuel ratio of the exhaust gas which is exhausted from the combustion chamber 2 the stoichiometric air-fuel ratio or rich. By making the air-fuel ratio of the exhaust gas flowing into the NO_{X} selective reduction catalyst the stoichiometric air-fuel ratio or rich, it is possible to release the NO_{X}. In the present embodiment, the air-fuel ratio of the exhaust gas which is exhausted from the combustion chamber is made rich.

Further, by performing after injection in the combustion chambers, the temperature of the exhaust gas rises and the three-way catalyst can be made the activation temperature or more. For this reason, the three-way catalyst can reduce the NO_{X} which is released from the NO_{X} selective reduction catalyst.

At least part of the fuel of the after injection is burned in the combustion chambers. By having at least part of the fuel burned, the light unburned hydrocarbons (HC) and CO etc. which are contained in the exhaust gas are increased. It is possible to feed the engine exhaust passage light unburned hydrocarbons (HC), CO, etc. as a reducing agent. Light unburned hydrocarbons, CO, etc. are superior in reducibility, so are preferable as a reducing agent.

Referring to FIG. 16, when performing after injection in the combustion chambers and, furthermore, throttling back the throttle valve to adjust the air-fuel ratio of the exhaust gas for rich combustion control, the air-fuel ratio of the exhaust gas gradually becomes smaller. For this reason, there is a time period during which the air-fuel ratio of the exhaust gas flowing into the NO_{X} selective reduction catalyst is within the desorption region. In the present embodiment, by feeding a reducing agent to the NO_{X} selective reduction catalyst in the desorption region, the NO_{X} which is desorbed from the NO_{X} selective reduction catalyst is selectively reduced.

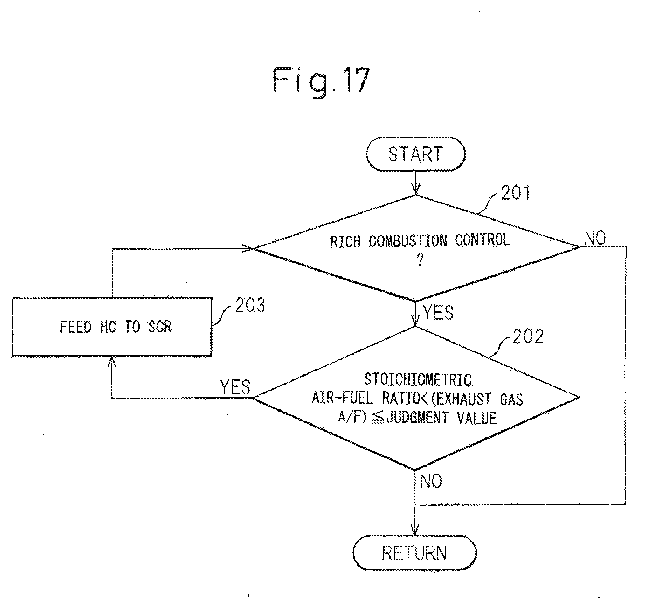

FIG. 17 is a flow chart of control of the exhaust purification system of an internal combustion engine in the present embodiment. At step 201, it is judged if rich combustion control is being performed in the combustion chambers. At step 201, in the case of a period during the rich combustion control, the routine proceeds to step 202. At step 202, it is judged if the air-fuel ratio of the exhaust gas is inside the desorption region. At step 202, it is judged if the air-fuel ratio of the exhaust gas flowing into the NO_{X} selective reduction catalyst 17 is larger than the stoichiometric air-fuel ratio. Furthermore, it is judged if the air-fuel ratio of the exhaust gas flowing into the NO_{X} selective reduction catalyst 17 is a predetermined judgment value or less. As this judgment value, for example, a value at the end of the desorption region where the air-fuel ratio is large can be used.

When, at step 202, the air-fuel ratio of the exhaust gas flowing into the NO_{X} selective reduction catalyst 17 is within the range of the desorption region, this control is ended. When the air-fuel ratio of the exhaust gas flowing into the NO_{X} selective reduction catalyst 17 is within the range of the desorption region, the routine proceeds to step 203.

At step 203, a reducing agent is fed to the NO_{X} selective reduction catalyst 17. In the present embodiment, fuel is injected from the fuel addition valve 13. In the present embodiment, after injection is performed in the combustion chamber 2, the temperature of the exhaust gas which is exhausted from the engine body 1 rises. For this reason, the temperature of the NO_{X} selective reduction catalyst 17 can be raised to a temperature where selective reduction is possible. By injecting fuel from the fuel addition valve 13, it is possible to reduce the NO_{X} which is desorbed from the NO_{X} selective reduction catalyst.

By feeding fuel from the fuel addition valve, it is possible to shift to the operating state enabling reduction of NO_{X} in a short period of time. For example, as the change of the combustion pattern etc., the air-fuel ratio of the exhaust gas changes by a relatively slow speed. As opposed to this, the response in injection from the fuel addition valve is high. Even when the time period during which the air-fuel ratio of the exhaust gas is in the desorption region or the desorbed NO_{X} is slight, it is possible to reliably reduce the NO_{X}.

After step 203 ends, the routine proceeds to step 201. At step 201, this control is ended when not during rich combustion control.

In the present embodiment, the explanation was given with reference to the example of operation passing through the desorption region during the period when rich combustion control is being performed, but the invention is not limited to this embodiment. The present invention can be applied to the time, if performing any operation, the air-fuel ratio of the exhaust gas flowing into the NO_{X} reduction catalyst becomes within the desorption region. In particular, the present invention exhibits a remarkable effect when the time during which the exhaust purification system operates in the desorption region is long.

In the present embodiment, to lower the air-fuel ratio of the exhaust gas flowing into the NO_{X} selective reduction catalyst, after injection is performed in a combustion chamber, but the invention is not limited to this embodiment. Post injection may also be performed. In this way, by increasing the amount of fuel which is injected into the combustion chamber, it is possible to lower the air-fuel ratio of the exhaust gas flowing into the NO_{X} selective reduction catalyst.

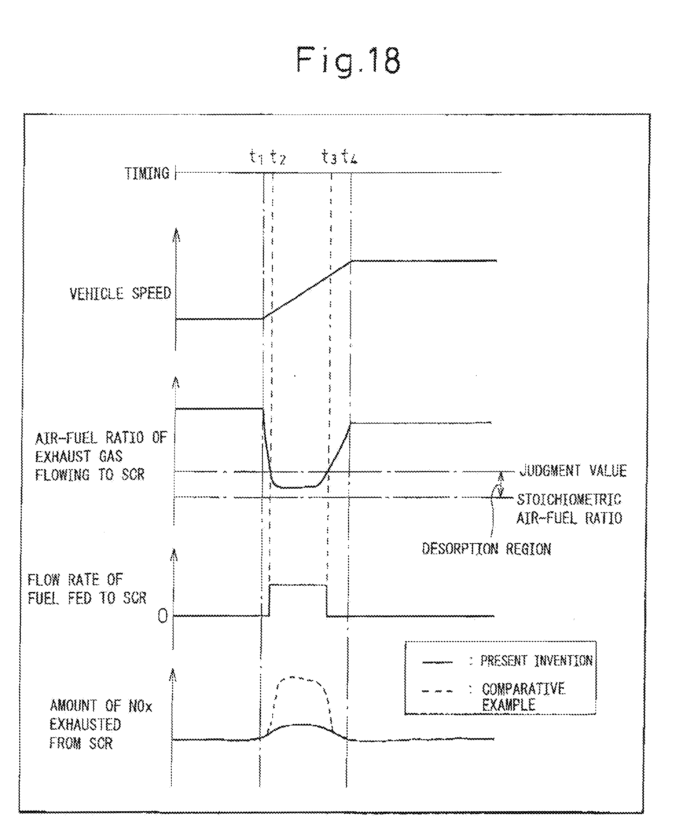

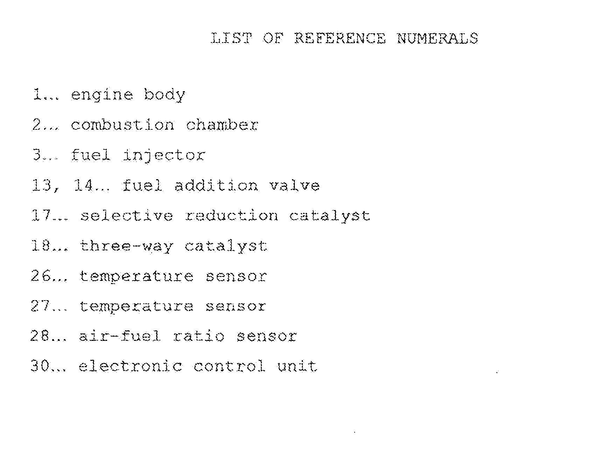

FIG. 18 shows the time chart for explaining the second operating example in the present embodiment. The second operating example is the operating example when the air-fuel ratio of the exhaust gas flowing into the NO_{X} selective reduction catalyst become within a range of the desorption region for a while. The second operating example is an example where the vehicle in which the internal, combustion engine is arranged is accelerating.

The vehicle is driven by a certain speed until the time t₁. The vehicle is accelerated from the time t₁ to the time t₄. The air-fuel ratio of the exhaust gas flowing into the NO_{X} selective reduction catalyst becomes smaller from the time t₁ to the time t₄. At this time, in the period from the time t₂ to the time t₃, the air-fuel ratio of the exhaust gas is a value in the desorption region.

Referring to FIG. 1, the air-fuel ratio of the exhaust gas flowing into the NO_{X} selective reduction catalyst 17 can be detected by the air-fuel ratio sensor 28. The exhaust purification system detects when the air-fuel ratio of the exhaust gas flowing into the NO_{X} selective reduction catalyst 17 becomes a value in the desorption region. In this case, it is possible to feed fuel from the fuel addition valve 13 at the upstream side of the NO_{X} selective reduction catalyst 17 so as to reduce the desorbed NO_{X}. In the present embodiment, the NO_{X} selective reduction catalyst is continuously fed fuel from the fuel addition valve during the period in which the air-fuel ratio of the inflowing exhaust gas is a value in the desorption region. When feeding fuel from the fuel addition valve to the NO_{X} selective reduction catalyst, it is also possible to intermittently feed the fuel.

The comparative example is an example where the NO_{X} selective reduction catalyst is not fed a reducing agent. In the comparative example, when the air-fuel ratio of the exhaust gas is inside of the desorption region, the NO_{X} amount which is exhausted from the NO_{X} selective reduction catalyst becomes greater. As opposed to this, when the air-fuel ratio of the exhaust gas is inside the desorption region, by feeding the NO_{X} selective reduction catalyst a reducing agent, it is possible to reduce the NO_{X} amount which is exhausted from the NO_{X} selective reduction catalyst.

The present embodiment selectively reduces the NO_{X} which is exhausted from the desorption region inside of the NO_{X} selective reduction catalyst so as to purify the NO_{X}, but the invention is not limited to this embodiment. It is also possible to arrange a system which purifies the NO_{X} which is exhausted from the NO_{X} selective reduction catalyst at the downstream side of the NO_{X} selective reduction catalyst.

Further, in the present embodiment, as the NO_{X} reduction catalyst, an NO_{X} selective reduction catalyst is arranged, but the invention is not limited to this embodiment. The NO_{X} reduction catalyst may be any catalyst which has the function of absorbing the NO_{X} which is contained in the exhaust gas when the air-fuel ratio of the inflowing exhaust gas is lean, releasing the absorbed NO_{X} when the air-fuel ratio of the inflowing exhaust gas is the stoichiometric air-fuel ratio or rich, and, furthermore, selectively reducing the NO_{X}.

For example, the NO_{X} reduction catalyst can include an NO_{X} storage reduction catalyst. In the NO_{X} storage reduction catalyst as well, NO_{X} is stored in the NO_{X} absorbent and is adsorbed at the catalyst metal. For this reason, when the air-fuel ratio of the inflowing exhaust gas is in the desorption region, desorption of NO_{X} occurs. At this time, by using the reducing agent feed device to feed a reducing agent, is possible to selectively reduce the NO_{X}.

In the NO_{X} storage reduction catalyst the NO_{X} is mainly stored in the NO_{X} absorbent. For this reason, the desorbed amount of NO_{X} in the desorption region becomes greater at the NO_{X} selective reduction catalyst than the NO_{X} storage reduction catalyst. For this reason, when the exhaust purification system is provided with an NO_{X} selective reduction catalyst, the advantageous effect of the present invention becomes remarkable. That is, in the NO_{X} selective reduction catalyst, the NO_{X} is easily desorbed at the desorption region, so the effect of suppressing the exhaust of NO_{X} of the present invention becomes remarkable.

The rest of the configuration, the action, and the effects are similar to the first embodiment, so here the explanations will not be repeated.

The above embodiments may be suitably combined. In the above figures, the same or corresponding parts are assigned the same reference notations. Note that the above embodiments are illustrations and do not limit the invention. Further, the embodiments include changes shown in the claims.

## Claims

1. An exhaust purification system of an internal combustion engine which is provided with
an NO_{X} reduction catalyst which is arranged in an engine exhaust passage and which has the function of absorbing NO_{X} which is contained in exhaust gas when an air-fuel ratio of inflowing exhaust gas is lean, releasing the absorbed NO_{X} when the air-fuel ratio of the inflowing exhaust gas becomes a stoichiometric air-fuel ratio or rich, and selectively reducing the NO_{X} and
a reducing agent feed device which feeds a reducing agent to the NO_{X} reduction catalyst, wherein,
in the case of the region near the stoichiometric air-fuel ratio in the region where the air-fuel ratio of the exhaust gas flowing into the NO_{X} reduction catalyst is lean, the reducing agent feed device is used to feed reducing agent to the NO_{X} reduction catalyst to selectively reduce the NO_{X}.

2. An exhaust purification system of an internal combustion engine as set forth in claim 1, further provided with a three-way catalyst which is arranged downstream of the NO_{X} reduction catalyst in the engine exhaust passage, wherein
the reducing agent feed device includes a fuel addition valve which feeds fuel to the engine exhaust passage at the upstream side of the NO_{X} reduction catalyst, and,
if increasing the amount of fuel which is injected at the combustion chambers of the engine body so as to lower the air-fuel ratio of the exhaust gas flowing into the three-way catalyst to the stoichiometric air-fuel ratio or less, the system feeds fuel from the fuel addition valve to selectively reduce the NO_{X} at the NO_{X} reduction catalyst when the air-fuel ratio of the exhaust gas flowing into the NO_{X} reduction catalyst is inside the region near the stoichiometric air-fuel ratio.

3. An exhaust purification system of an internal combustion engine which is provided with
an NO_{X} reduction catalyst which is arranged in an engine exhaust passage and which has the function of absorbing NO_{X} which is contained in exhaust gas when an air-fuel ratio of inflowing exhaust gas is lean, releasing the absorbed NO_{X} when the air-fuel ratio of the inflowing exhaust gas becomes a stoichiometric air-fuel ratio or rich, and selectively reducing the NO_{X}, a three-way catalyst which is arranged downstream of the NO_{X} reduction catalyst, a reducing agent feed device which feeds a reducing agent to the NO_{X} reduction catalyst, and an air-fuel ratio reducing device which reduces the air-fuel ratio of the exhaust gas flowing into the three-way catalyst, therein,
in the operating region of the internal combustion engine, there is a specific operating region in which the air-fuel ratio of the exhaust gas flowing into the NO_{X} reduction catalyst is lean, at the NO_{X} reduction catalyst, the NO_{X} purification rate due to the selective reduction gradually decreases along with a temperature rise and, at the three-way catalyst, the NO_{X} purification rate gradually increases along with a temperature rise, and, in this specific operating region, when the NO_{X} purification rate of the NO_{X} reduction catalyst becomes smaller than a predetermined judgment value, the reducing agent feed device feeds the reducing agent to the NO_{X} reduction catalyst for selective reduction of NO_{X} and the air-fuel ratio reducing device makes the air-fuel ratio of the exhaust gas flowing into the three-way catalyst the stoichiometric air-fuel ratio or rich for reduction of NO_{X}.

4. An exhaust purification system of an internal combustion engine as set forth in claim 3, further provided with
a temperature raising device which raises a temperature of an NO_{X} reduction catalyst and
an absorption amount detection device which detects an absorption amount of NO_{X} of an NO_{X} reduction catalyst, wherein,
if the air-fuel ratio of the exhaust gas flowing into the NO_{X} reduction, catalyst is lean, when a temperature of an NO_{X} reduction catalyst is lower than a judgment value of a low temperature side for selective reduction and an absorption amount of NO_{X} of an NO_{X} reduction catalyst is an allowable value or more, the temperature raising device is used to raise the NO_{X} reduction catalyst, then the reducing agent feed device feeds the reducing agent to the NO_{X} reduction catalyst for selective reduction of the NO_{X}.

5. An exhaust purification system of an internal combustion engine as set forth in claim 3, wherein,
if the air-fuel ratio of the exhaust gas flowing into the NO_{X} reduction catalyst is lean, when the temperature of an NO_{X} reduction catalyst is higher than a judgment value of a high temperature side for selective reduction, the system makes the air-fuel ratio of the exhaust gas flowing into the three-way catalyst the stoichiometric air-fuel ratio or rich to reduce the NO_{X} at the three-way catalyst.
